# EUROPEAN PATENT SPECIFICATION

(11) **EP 2 128 316 B1**
(45) Date of publication and mention of the grant of the patent: **11.07.2012**
(21) Application number: 08703588.7
(22) Date of filing: 22.01.2008
(51) Int. Cl.: D01F 1/04, D01F 1/06, D01F 6/04, D02G 3/34, D02G 3/44, A01K 91/00

(54) **LUMINESCENT COMPOSITE YARN**
LUMINESZIERENDES VERBUNDGARN
FIL COMPOSITE LUMINESCENT

(30) Priority: 29.01.2007 JP 2007018387
(43) Date of publication of application: 02.12.2009
(73) Proprietor: Y.G.K CO., LTD., Minamiawaji-shi Hyogo 656-0502 (JP)
(72) Inventor: NAKANISHI, Shigeru, Minamiawaji-shi Hyogo 656-0502 (JP)
(74) Representative: Teipel, Stephan
(86) International application number: PCT/JP2008/050738
(87) International publication number: WO 2008/093560

(56) References cited:
- JP-A- 2002 125 548
- JP-A- 2002 339 179
- JP-A- 2004 084 148
- JP-A- 2004 308 048
- JP-A- 2005 200 774
- US-A1- 2003 082 381

## Description

### Technical Field

The present invention relates to a luminescent composite yarn comprising an ultra-high-molecular-weight polyethylene filament. In more detail, the present invention relates to a luminescent composite yarn suitable for a fishing line for night fishing or the like, the yarn having outstanding strength properties originating in an ultra-high-molecular-weight polyethylene filament, and sufficient luminescent performance to emit light when stimulated by an external light and to continue to emit light in a dark place even after the external stimulus is removed.

### Background Art

Various kinds of luminescent fibers and yarns have conventionally been proposed mainly to be used for fishing lines for night fishing. They are mainly formed from a composition of a thermoplastic resin containing a light storage agent (for example, see patent literature 1) and are provided with luminescent performance to emit light when stimulated by an external light and to continue to emit light in a dark place even after the external stimulus is removed, using the action of the light storage agent.

Meanwhile, yarns made of an ultra-high-molecular-weight polyethylene fiber have been attracting attention as fishing lines with high mechanical strength and little rate of elongation, and various kinds have been proposed in recent years (for example, see patent literature 2). Nevertheless, no luminescent yarn has been seen as a fishing line etc. made of an ultra-high-molecular-weight polyethylene fiber.

This is because spinning a yarn of an ultra-high-molecular-weight polyethylene fiber with a light storage agent necessary for adequate luminescence significantly deteriorates the strength and elongation properties of the ultra-high-molecular-weight polyethylene fiber.

Since an ultra-high-molecular-weight polyethylene fiber containing a light storage agent is not a realistic option, another conceivable option is coating with a resin composition containing a light storage agent. This method, however, needs a considerable amount of coating to ensure sufficiently visible luminescence, which may prevent ensuring properties necessary for a fishing line etc. made of an ultra-high-molecular-weight polyethylene fiber. A composite fiber having a core component of a high-strength organic synthetic fiber melt-coated with a thermoplastic resin composition containing a light storage agent has actually been proposed (for example, see patent literature 3). A melt-coated ultra-high-molecular-weight polyethylene fiber has a disadvantage of strength deterioration caused by the heat in the melt coating, in addition to the above-mentioned problems.

### Citation List

### Patent Literature

Patent Literature 1: JP-A-2001-89928 (CLAIMS)
Patent Literature 2: JP-A-2004-84148 (CLAIMS) or US2003/0082381 A.
Patent Literature 3: JP-A-2005-200774 (CLAIMS, Comparative Example 1)

### Disclosure of Invention

### Problem to be Solved by the Invention

In view of the above-mentioned situation, an object of the present invention is to provide a luminescent composite yarn comprising an ultra-high-molecular-weight polyethylene filament and having both visibility in a dark place and properties necessary for a fishing line or other yarns made of an ultra-high-molecular-weight polyethylene filament.

### Means for Solving the Problem

The present inventors made extensive investigation to solve the problem described above, and found that according to claim 1, a composite yarn comprising an ultra-high-molecular-weight polyethylene filament and an additional synthetic resin filament, at least a part of the additional synthetic resin filament comprising a light storage agent, has desired properties. They carried out further investigations and finally completed the present invention.

That is, the present invention relates to:
(1) a composite yarn comprising an ultra-high-molecular-weight polyethylene filament and an additional synthetic resin filament, at least a part of the additional synthetic resin filament comprising a light storage agent;
(2) the composite yarn according to the above-mentioned (1), wherein the specific gravity of the yarn is less than 1.0;
(3) the composite yarn according to the above-mentioned (1) or (2), wherein the strength of the yarn is not less than 11 cN/dtex;
(4) the composite yarn according to any one of the above-mentioned (1) to (3), wherein the rate of elongation of the yarn is not more than 5%;
(5) the composite yarn according to any one of the above-mentioned (1) to (4), wherein the additional synthetic resin filament is made of at least one thermoplastic resin selected from the group consisting of a polyolefin resins, polyamide resins, polyester resins and fluorine resins;
(6) the composite yarn according to any one of the above-mentioned (1) to (5), wherein the yarn is a braided yarn;
(7) the composite yarn according to the above-mentioned (6), wherein the additional synthetic resin filament is a monofilament;
(8) the composite yarn according to any one of the above-mentioned (1) to (7), wherein filaments constituting the yarn are integrated with the use of a resin;
(9) the composite yarn according to any one of the above-mentioned (1) to (8), wherein a silicone surface treatment agent is applied to the yarn;
(10) the composite yarn according to any one of the above-mentioned (1) to (8), wherein the periphery of the yarn is further coated with a resin; and
(11) the composite yarn according to any one of the above-mentioned (1) to (10), wherein the yarn is a fishing line.

### Effect of the Invention

The composite yarn of the present invention has luminescence excellent in the visibility in a dark place which conventional yarns made of an ultra-high-molecular-weight polyethylene filament do not have, and can be preferably used in particular as a fishing line for night fishing. In addition, the yarn relating to the present invention does not need a large amount of a light storage agent for desired luminescence, and therefore is economical as well as excellent in design.

### Best Mode for Carrying Out the Invention

The composite yarn of the present invention comprises an ultra-high-molecular-weight polyethylene filament and an additional synthetic resin filament, at least a part of which comprises a light storage agent.

As an ultra-high molecular weight polyethylene constituting the above-mentioned ultra-high-molecular-weight polyethylene filament of the present invention, a polyethylene having a molecular weight of not less than about 200,000, preferably not less than about 600, 000 is preferably used. Such an ultra-high-molecular-weight polyethylene may be a homopolymer or a copolymer of ethylene with a lower α olefin having about 3 to 10 carbon atoms, for example, propylene, butene, pentene hexene, or the like. As this copolymer of ethylene with an α olefin, a copolymer containing the latter of about 0.1 to 20, preferably about 0.5 to 10 per 1000 carbon atoms on average is preferably used.

The method for producing the ultra-high-molecular-weight polyethylene filament is described in, for example, JP-A-55-5228 and JP-A-55-107506, and these methods known per se may be used. Alternatively, as the ultra-high-molecular-weight polyethylene filament, a commercially available product such as Dyneema (trade name, manufactured by Toyobo) and Spectra (trade name, manufactured by Honeywell) may be used.

The above-mentioned Dyneema and Spectra are produced basically in a similar manner and are generally known as an ultra-high-molecular-weight polyethylene filament produced by gel spinning. However, as this ultra-high-molecular-weight polyethylene filament, no monofilament with a sufficient diameter is commonly available. Accordingly, an ultra-high-molecular-weight polyethylene filament is usually a multifilament. In the present invention as well, as the ultra-high-molecular-weight polyethylene filament, a multifilament is preferably used. An ultra-high-molecular-weight polyethylene filament having a tensile strength of not less than 18 cN/dtex, a rate of elongation not more than 6%, and a modulus of elongation not less than 530 cN/dtex, is preferably used.

The composite yarn of the present invention comprises an additional synthetic resin filament (hereinafter may be abbreviated as "auxiliary filament") in addition to the above-mentioned ultra-high-molecular-weight polyethylene filament. The synthetic resin constituting the above-mentioned auxiliary filament (hereinafter may be referred to as "additional synthetic resin") is not particularly limited. Any publicly known fiber-forming synthetic resin can be used, but a thermoplastic resin is preferred. Specific examples of the synthetic thermoplastic resin include, for example, polyolefin-based, polyamide-based, polyester-based, fluorine-based, polyacrylonitrile-based, and polyacetal-based resins. Inter alia, polyamide-based, polyester-based, fluorine-based, and polyacetal-based resins are preferred, a polyolefin-based resin is more preferred, and a polypropylene resin is particularly preferred. A polyolefin-based resin, especially a polypropylene resin, has a low specific gravity and therefore makes it possible to reduce the specific gravity of the entire yarn of the present invention. In addition, such a resin has a melting point similar to that of the above-mentioned ultra-high-molecular-weight polyethylene filament, and therefore makes it easy to set temperature conditions for post processing of the yarn.

Examples of the polyamide-based resin include aliphatic polyamides such as nylon 6, nylon 66, nylon 12 and nylon 6,10, and copolymers thereof; semi-aromatic polyamides formed of an aromatic diamine and a dicarboxylic acid, and copolymers thereof; and the like.

Examples of the polyester-based resin include polyesters and copolymers thereof obtained by polycondensation of an aromatic dicarboxylic acid, for example, terephthalic acid, isophthalic acid, naphthalene-2,6-dicarboxylic acid, phthalic acid, α,β-(4-carboxyphenyl)ethane, 4,4'-dicarboxyphenyl, sodium 5-sulfoisophthalic acid, etc., an aliphatic dicarboxylic acid, for example, adipic acid, sebacic acid, etc. , or an ester thereof, with a diol compound, for example, ethylene glycol, diethylene glycol, 1,4-butanediol, polyethylene glycol, tetramethylene glycol, etc.; and the like.

Examples of the fluorine-based resin include polyvinylidene fluoride, polytetrafluoroethylene, polymonochlorotrifluoroethylene and polyhexafluoropropylene, and copolymers thereof; and the like.

Examples of the polyacetal-based resin include homopolymers and copolymers having an acetal bond in the main chain, for example, polyoxymethylene.

At least a part of the filament made of the above-mentioned additional synthetic resin needs to contain a light storage agent. An auxiliary filament containing a light storage agent can easily been obtained by using a thermoplastic resin as the additional synthetic resin, kneading a light storage agent into the additional synthetic resin, and then melt-spinning this by a publicly known method.

The light storage agent used in the present invention is a publicly known light storage agent, and any one may be used as long as it emits light when stimulated by an external light and continues to emit light visible to the naked eye in a dark place even after the external stimulus is removed.

As the light storage agent, for example, the luminescent phosphor obtained by doping a rare earth on an alkaline earth metal salt of an aluminum oxide, described in JP-A-2005-200774, may be used. Examples of the alkaline earth metal salt of an aluminum oxide include SrAl₂O₄, CaAl₂O₄ and Sr₄Al₁₄O₂₅, and doping 0.001 to 10% (mole ratio relative to the alkaline earth metal) Eu (europium) and/or Dy (dysprosium) and/or Nd (neodymium), each of which is a rare earth element, on such a compound gives a light storage agent that is preferably used because of its high luminance. The above-mentioned light storage agent is commercially available as, for example, LumiNova (registered trademark) G-300FF, V-300M or BG-300F by Nemoto & Co., Ltd., but is not limited thereto.

Although the average particle diameter of the light storage agent is not particularly limited, a too large or too small average particle diameter is unfavorable. When the average particle diameter is too large, the surface smoothness or the spinnability of the fiber containing the agent may decrease. When the average particle diameter is too small, particles may cohere and partly form coarse particles in spinning, resulting in similarly decreased surface smoothness or spinnability of the fiber. Considering this point, when the average particle diameter of the light storage agent is measured by the laser light scattering (laser diffraction) method before being mixed with the resin, the particle diameter at 50% of cumulative particle size distribution (D50) is preferably 2.0 to 20.0 µm.

The auxiliary filament preferably contains 1 to 20% by mass and more preferably 2 to 7% by mass of the light storage agent based on the total mass of the auxiliary filament.
Too little content of the light storage agent in the additional filament, which may result in insufficient luminescence of the yarn, and too much content, which may negatively affect spinning, are both undesirable.

The shape of the cross section perpendicular to the fiber axis direction of the auxiliary filament is not particularly limited, and the section may be circular, deformed, or hollow. Further, the cross section may be a composite section which is made of two or more same or different resins or compositions, for example, what is called a sheath-core type. In particular, a sheath-core type fiber whose sheath component contains a light storage agent is preferred because efficient luminescence can be achieved with a reduced amount of the light storage agent. For example, the core/sheath area ratio of the cross section is preferably 40/60 to 95/5, and more preferably 60/45 to 90/10. In such a sheath-core type auxiliary filament, the core component substantially may not contain any light storage agent, and the sheath component preferably contains 1 to 20% by mass and more preferably 2 to 7% by mass of a light storage agent based on the total mass of the sheath component. Such a sheath-core type fiber can be easily manufactured using a publicly known complex melt spinning apparatus. In the above mentioned sheath-core type fiber whose core component substantially does not contain any light storage agent and whose sheath component contains a light storage agent, the core and sheath components are preferably made of the same kind of resin. A sheath-core binder fiber whose sheath component has a melting point lower than that of the core component is also preferred, and in another preferable embodiment, the sheath component does not contain any light storage agent and the core component contains a light storage agent.

In the present invention, the auxiliary filament may contain an additive other than a light storage agent. For example, in order to adjust specific gravity, high-specific-gravity substances, such as a metal and a metallic compound, for example, barium oxide or barium sulfate may be contained as an additive. The above-mentioned additive other than a light storage agent may be contained in an auxiliary filament which contains a light storage agent or in an auxiliary filament which does not contain any light storage agent, among the auxiliary filaments of the yarn. The additive other than a light storage agent may be contained in the core component of the above-mentioned sheath-core type filament as well.

In the composite yarn of the present invention, at least one of auxiliary filaments must contain a light storage agent. One or more other filaments that do not contain any light storage agent may exist as well but need not exist in the yarn.

As for the area ratio of each filament relative to the total cross section area of the composite yarn of the present invention (hereinafter may be abbreviated as "cross-section ratio"), the cross-section ratio of the ultra-high-molecular-weight-polyethylene filament is preferably 40 to 90%, and more preferably 50 to 80%. Meanwhile, the cross-section ratio of the auxiliary filament containing a light storage agent (hereinafter may be abbreviated as "light storage filament") is preferably 10 to 60%, and more preferably 20 to 50%. The cross-section ratio of the ultra-high-molecular-weight-polyethylene filament less than 40% is not preferred because the low ratio tends to make the strength and elongation properties of the entire composite yarn inappropriate for the present invention. On the other hand, the cross-section ratio of the light storage filament less than 10% is not also preferred because the low ratio tends to result in insufficient luminescence. The sum of the cross-section ratio of the above-mentioned ultra-high-molecular-weight filament and that of the light storage filament may be 100% or less than 100%.

The auxiliary filament of the present invention may be a monofilament or-a multifilament, and appropriate one may be selected depending on the purpose. For example, as the auxiliary filament, a monofilament is preferred to give firmness to the composite yarn, and a multifilament is preferred to obtain a soft composite yarn. Also, a monofilament and a multifilament may be used in combination.

The specific gravity of the composite yarn of the present invention may be suitably determined depending on the purpose and is not particularly limited. Considering floating the yarn on the water as in Fukase fishing for example, however, the specific gravity is preferably less than 1.0. Due to the effect of water, the part of a yarn below the water surface tends to be less visible. Consequently, a yarn that floats on water is preferred because of more visible luminescence. The specific gravity of the yarn of the present invention can be adjusted by, for example , selecting the type of the auxiliary filament. To obtain a composite yarn with a specific gravity less than 1.0, a polyolefin fiber, especially polypropylene fiber, is preferably selected as the auxiliary filament.

The tensile strength of the composite yarn of the present invention is preferably not less than 11 cN/dtex, and more preferably not less than 15 cN/dtex. The tensile strength is measured using the universal testing machine "Autograph AG-100kNI" (trade name, manufactured by Shimadzu Corporation), according to JIS L 1013.

The rate of elongation of the composite yarn of the present invention is preferably not more than 10%, and more preferably not more than 5%. The above-mentioned rate of elongation is preferred, for example when used as a fishing line, for easy and correct perception of a fish strike etc. The rate of elongation is measured using the universal testing machine "Autograph AG-100kNI" (trade name, manufactured by Shimadzu Corporation), according to JIS L 1013. In the measurement, the rupture of the ultra-high-molecular-weight polyethylene filament is regarded as the rupture of the entire yarn.

Examples of the constitution of the composite yarn of the present invention include a paralleled yarn, a twisted yarn, a braided yarn, etc. having the above-mentioned ultra-high-molecular-weight-polyethylene filament in combination with the above-mentioned auxiliary filament. A braided yarn consisting of multiple ultra-high-molecular-weight polyethylene filaments and one or more auxiliary filaments is preferred, and in particular, a braided yarn consisting of multiple ultra-high-molecular-weight polyethylene multifilaments and one or more light storage monofilaments (light storage filaments that are monofilaments) is preferred.

When the composite yarn of the present invention is a twisted yarn, a preferred twisted yarn may be obtained by paralleling multiple filaments constituting the composite yarn of the present invention (hereinafter may be abbreviated as "constituent filaments") and then twisting the filaments at a twist multiplier K of preferably about 0.2 to 1.5, more preferably about 0.3 to 1.2, and still more preferably about 0.4 to 0.8. Considering the abrasion resistance of the yarn, the twist multiplier is preferably not less than about 0.2, and for a lower rate of elongation, the twist multiplier is preferably not more than about 1.5. The twist multiplier K is calculated from the following formula: K=t×D^{1/2} (t: twist count (turn/m), D: fineness (dtex)). The fineness in the above formula is determined according to JIS L 1013.

When the composite yarn of the present invention is a braided yarn, a known braiding constitution may be applied. For example, the braided yarn may be a yarn known as a 4 strand, 8 strand, 12 strand or 16 strand yarn, consisting of 4, 8, 12 or 16 filaments respectively, to braid, but is not limited thereto. Braiding is usually carried out using a braiding machine (interlacing machine). In the case of a 4 strand yarn, for example, 4 constituent filaments are used, and each filament at the right or the left is brought to the center in turn to form a yarn.

The numbers of ultra-high-molecular-weight-polyethylene filaments and auxiliary filaments of a braided yarn are not particularly limited as long as the sum agrees with the total number of the constituent filaments, but at least one constituent filament must be a light storage filament. As the light storage filament, a monofilament is preferred. However, a multifilament containing a light storage agent in at least part of the filaments thereof may be used.

Specifically, in the case of a 4 strand yarn, it is preferred that 2 or 3 of the constituent filaments are ultra-high-molecular-weight-polyethylene filaments, and the other 2 or 1 is a light storage filament.

In the case of an 8 strand yarn, it is preferred that 4 to 6 of the constituent filaments are ultra-high-molecular-weight-polyethylene filaments, and the other 4 to 2 are light storage filaments.

In the case of a 12 strand yarn, it is preferred that 6 to 10 of the constituent filaments are ultra-high-molecular-weight-polyethylene filaments, and the other 6 to 2 are light storage filaments.

In the case of a 16 strand yarn, it is preferred that 8 to 14 of the constituent filaments are ultra-high-molecular-weight-polyethylene filaments, and the other 8 to 2 are light storage filaments.

The fineness of a constituent filament of a braided yarn varies depending on the material, the thickness of the entire composite yarn, etc., and is not particularly limited. Preferred fineness of an ultra-high-molecular-weight-polyethylene filament is 11 to 440 dtex, and more preferred is 11 to 200 dtex. The fineness of a light storage filament is preferably 11 to 440 dtex. Also, it is preferred that the fineness of a light storage filament is similar to that of an ultra-high-molecular-weight-polyethylene filament.

The braiding angle of a braided yarn is preferably about 5° to 90°, more preferably about 5° to 50°, and still more preferably about 20° to 30°. To maintain the abrasion resistance of the yarn, the braiding angle is preferably not less than about 5°, and to keep a low rate of elongation, the angle is preferably not more than about 90°. The braiding angle can be determined using a digital HD microscope VH-7000 (manufactured by KEYENCE CORP.).

A core yarn may be placed in the core part of a braided yarn if desired.

The composite yarn of the present invention has a luminescence excellent in the visibility in a dark place after light storage. The advantage of the present invention will be obvious if, for example, compared to a yarn coated with a resin containing the same amount of the light storage agent. That is, in the present invention, the light storage agent concentrates in a smaller area, a light storage filament. As a result, strong luminescence can be obtained although the luminant area is small. On the other hand, in the case of a coating containing the light storage agent, the luminant area is large but the luminescence is weak because the light storage agent is thinly distributed over a large area. The former is more visible like a single point-like star having a narrow view angle which is obviously visible in the night sky, while a nebula having a wider view angle and emitting a dim light cannot be observed with the naked eye. The finding that the inventors would particularly emphasize is that the luminescence of a fishing line for night fishing, etc. , does not necessarily need to be a continuous threadlike luminescence. An intermittent or chain-line-like luminescence is never inferior in practical visibility. Rather, it attracts attention, therefore is more visible, and has an excellent effect in design. When the yarn of the present invention is a braided yarn, such a chain-line-like luminescence can be realized. When the intervals in the chain line are very small, the braided yarn may be recognized not as a chain line but as a continuous line unless seen from up close.

In the composite yarn of the present invention, the constituent filaments are preferably integrated. Here, "integrated" means that adjacent constituent filaments are joined with or without an adhesive without coming apart during normal use. More specifically, the yarn preferably has a constitution that does not allow any constituent filaments to shift or slip out even when the filament is broken. In addition, the composite yarn of the present invention preferably has a constitution in which the constituent filaments do not come apart even when the yarn is cut.

In a possible method to achieve such integration without using any adhesive, ultra-high-molecular-weight-polyethylene filament are exposed to a temperature not higher than the melting point of the ultra-high-molecular-weight-polyethylene filament for a period of time sufficient for thermal fusion bonding of at least a part of an adjacent filament. However, it is difficult to perform this method without impairing the strength and elongation properties of the ultra-high-molecular-weight-polyethylene filament. Therefore, integration using a resin as an adhesive is preferred. The resin may be either a cold adhesive resin or a thermal adhesive resin, and a thermal adhesive resin is more preferred because of its ease in handling during the manufacture of the yarn.

The thermal adhesive resin used for bonding the above constituent filaments preferably softens or melts at a temperature lower than the melting point of the constituent filaments. Specifically, the melting point of the thermal adhesive resin is about 50 to 200°C, preferably about 50 to 160°C, more preferably about 60 to 135°C, and particularly preferably about 100°C. The melting point can be measured, for example, by a method according to JIS L 1013 (1999) using a known measurement device, for example "DSC7" manufactured by PerkinElmer, Inc.

As the above-mentioned thermal adhesive resin, a known resin may be used, and examples of the resin include a polyolefin-based resin, a polyester-based resin, a polyamide-based resin, and the like. Inter alia, the thermal adhesive resin is preferably, for example, a polyolefin-based resin made of a polyolefin copolymer mainly containing polyethylene or polypropylene, being a soft resin that can be softened when heated at a temperature of about 50°C for about 10 seconds. In addition, a polyolefin resin having a melting point of about 100°C and exhibiting low viscosity in its molten state is also preferred. These polyolefin resins easily go into a fluidized state when heated for only a short period of time, and can rapidly diffuse and permeate into fibers, and therefore can exert an excellent adhesive function.

The thermal adhesive resin is more preferably a hot melt adhesive. The hot melt adhesive is a 100% solid adhesive mainly comprising a thermoplastic polymer. After being applied in its molten state with a lower viscosity, the hot melt adhesive becomes solidified as it is cooled down, and exerts adhesion force. The hot melt adhesive is not particularly limited as long as it is like the ones mentioned above, and a publicly known hot melt adhesive may be used. Inter alia, a hot melt adhesive which does not melt at a temperature not higher than about 100°C is preferred. The reason is that such an adhesive does not melt during transportation or storage of the yarn, and therefore, do not become solidified between the yarn wound around a spool. The melting point of the hot melt adhesive is preferably lower than that of the constituent filaments.

The examples of the hot melt adhesive include, for example, depending on the type of the base polymer, ethylene-vinylacetate copolymer (EVA) adhesives, polyethylene adhesives, polyolefine adhesives, thermoplastic rubber adhesives, ethylene-ethyl acrylate copolymer (EEA) adhesives, polyvinyl acetate copolymer adhesives, polycarbonate (PC) adhesives, and the like. Inter alia, polyethylene adhesives or polyolefine adhesives are preferred.

As the hot melt adhesive, a reactive hot melt adhesive is still more preferred. In a reactive hot melt adhesive, crosslinking reaction occurs after adhesion, resulting in improved heat resistance. Specifically, in a case where a reactive hot melt adhesive is melted at a relatively low temperature and applied or impregnated into constituent filaments, once adhesion occurs, the adhesive will not melt again at a low temperature, specifically at a temperature not higher than about 100°C. Therefore, the use of a reactive hot melt adhesive minimizes the possibility that the hot melt adhesive will melt during transportation or storage of the yarn.

The reactive hot melt adhesive is not particularly limited, and any reactive hot melt adhesive known in the art may be used. Inter alia, a preferred reactive hot melt adhesive melts at a relatively low temperature, specifically about 60 to 130°C, and more preferably at about 70 to 100°C at the time of application.

Specific examples of the above-mentioned reactive hot melt adhesive can be classified as follows, depending on the type of the crosslinking reaction: for example, (a) an ion crosslinking hot melt adhesive in which crosslinking reaction is caused by carboxyl groups in a polymer-and polyvalent metal ions; (b) a thermal crosslinking hot melt adhesive to be cured by heating after adhesion; (c) a hot melt adhesive in which crosslinking reaction is initiated by irradiating block copolymers or polyesters having double bonds with high energy beams, such as electron beams and ultraviolet rays; (d) a moisture curing hot melt adhesive in which crosslinking is caused by reaction with moisture in the air or in an adherend after melted and applied; and (e) a hot melt adhesive in which crosslinking structure is formed by the reaction of a polymer having various functional groups and an additive or polymer that reacts with the functional groups, the two materials separately melted and mixed with each other immediately before application.

The reactive hot melt adhesive is preferably a thermal crosslinking hot melt adhesive or a moisture curing hot melt adhesive, and particularly preferably a moisture curing hot melt adhesive. Specific examples of the thermal crosslinking hot melt adhesive include a hot melt adhesive comprising blocked isocyanate obtained by blocking (a) a terminal carboxyl group or amino group of polyester or copolyamide, or (b) an isocyanate group introduced into a molecular terminus or a side chain, with a blocking agent such as caprolactam and phenol Specific examples of the moisture curing hot melt adhesive include a hot melt adhesive where an alkoxy group is introduced into a polymer, a hot melt adhesive where an isocyanate group is introduced into a polymer, and the like.

The composite yarn of the present invention preferably has a silicone surface-treatment agent applied thereto. When a silicone surface-treatment agent is applied to the composite yarn of the present invention, the agent permeates between constituent filaments, and the yarn becomes transparent or semi-transparent. Examples of the silicone surface-treatment agent include silicone oil (for example, dimethyl, methylphenyl or methylhydrogen silicone oil, etc.), modified silicone oil, and a treatment agent mainly comprising one or more kinds thereof.

From the viewpoint of making the yarn transparent or semi-transparent, the amount of the silicone surface-treatment agent applied is preferably 3 to 20% by mass and more preferably 5 to 15% by mass in outer percentage based on the mass of the yarn.

In addition, the periphery of the composite yarn of the present invention is preferably coated with a resin. Coating the composite yarn of the present invention with a resin prevents, for example, deformation of twisting or braiding of the yarn, keeps the rate of elongation low, and improves abrasion resistance, water resistance, weather resistance, etc. In the present invention, the resin coating may stay only on the periphery of the yarn or may permeate into the yarn. It is particularly preferred that the resin used for coating permeates into the yarn and helps integration of the constituent filaments. That is, a preferred embodiment is that constituent filaments are integrated by a resin and further the periphery is coated with the resin. Therefore, the above-described thermal adhesive resins used for bonding the constituent filaments can preferably be used as the resin for coating.

When the composite yarn of the present invention is coated with a resin and/or the constituent filaments are bonded, the preferable ratio of the total amount of the resin used for bonding of constituent filaments and/or coating to the mass of the constituent filaments is about 0.5/99.5 to 20/80. When a thermal adhesive resin is used, the total mass of the thermal adhesive resin to the mass of the entire composite yarn of the present invention is preferably about 0.5 to 20% and more preferably about 0.5 to 10%. The percentage within this range is preferred because sufficient adhesion force can be obtained while undesired irregularity of the surface of the composite yarn caused by excessive thermal adhesive resin can be surely avoided.

In the present invention, the constituent filaments and/or the resin bonding the constituent filaments and/or the resin coating may contain various kinds of known additives such as an abrasion resistant agent, a delusterant, a modifier, a ultraviolet ray absorbent, a colorant, a pigment, and a conductive substance to the extent that the objective of the present invention would not be impaired.

Hereinafter, examples of the method for manufacturing the composite yarn of the present invention will be described in detail.

As the method for manufacturing light storage filaments, a predetermined amount of the light storage agent is added to the thermoplastic resin for forming the light storage filaments, the mixture is melt-kneaded, and melt spinning is performed by a publicly known method. When the light storage agent is added, it is preferred that a masterbatch is prepared by adding a high concentration of the light storage agent to the thermoplastic resin beforehand and then the masterbatch is mixed and melt-kneaded. The melt spinning temperature is preferably in the range where neither the thermoplastic resin nor the light storage agent deteriorates. The light storage filament may be drawn before being made into a composite with the ultra-high-molecular-weight-polyethylene filament or be left undrawn. Also, the filament may be drawn into a tapered shape.

Meanwhile, the ultra-high-molecular-weight-polyethylene filament can be obtained by a publicly known method or as a commercial product. As the ultra-high-molecular-weight-polyethylene filament, a commercial product further drawn may be used. Also, the filament may be drawn into a tapered shape.

A predetermined number of the ultra-high-molecular-weight-polyethylene filaments and a predetermined number of light storage filaments are prepared and made into a composite. For example, predetermined numbers of those constituent filaments may be made into a braided yarn by braiding. The obtained composite yarn may be further drawn if desired.

The above-described constituent filaments before being made into a composite yarn may be already drawn filaments, filaments drawn at a draw ratio lower than a maximum draw ratio, or filaments not drawn at all. In the following description, not only a filament which is not drawn at all but also a filament drawn at a draw ratio lower than a maximum draw ratio, which can be further drawn, are collectively referred to as "undrawn filaments".

The maximum draw ratio means the highest draw ratio without any manufacturing problem caused by filament rupture during the manufacturing process of the filaments. That is, as the draw ratio in a spinning process increases, the tensile strength and the stiffness of a filament increase. However, the draw ratio cannot be unrestrictedly increased because, as the draw ratio in the manufacturing process increases, filament rupture in the manufacturing process occurs more frequently. The highest draw ratio that can keep the frequency of such filament rupture which interrupts the drawing process within an allowable range can be experimentally determined without difficulty. This draw ratio is called maximum draw ratio.

Before drawing each constituent filament or a composite yarn, it is preferred that oil is applied thereto. The method of applying oil is not particularly limited, and any publicly known method may be used. Specific examples of the method of applying oil include immersion oiling, spray oiling, roller oiling and guiding oiling by the use of a measuring pump, and immersion oiling or spray oiling is preferably used. When oil is applied before drawing like this, each constituent filament or a composite yarn may be washed with water after drawing if desired. In particular, in the case where a resin is to be used for bonding constituent filaments or coating the composite yarn, it is preferred to remove oil by washing with water etc.

The above-mentioned oil is not particularly limited and can be suitably chosen from oils that are usually applied to filaments. Examples of the oil include sizing resins (binders), base lubricating oils, surface treatment agents, etc., and one or a mixture of two or more thereof may be used.

Examples of the above-mentioned sizing resin include a polyurethane-based resin, a silicon-based resin, a fluorine-based resin, etc. Examples of the base lubricating oil include dimethylpolysiloxane, polyether, etc. Examples of the surface active agent include higher alcohol, higher alcohol fatty acid ester, polyoxyethylene higher alcohol ether, polyoxyethylene higher fatty acid ester, polyethylene glycol higher fatty acid ester, polyoxyethylene alkylamino ether, polyoxyethylene castor oil ether, alkyl phosphate (preferably alkali metal salt or amine salt), polyoxyethylene alkyl ether phosphate (preferably alkali metal salt or amine salt), alkyl sulfonate sodium salt, etc. These may be used alone or in combination of two or more.

In more detail, examples of the above-mentioned sizing resin as the above-mentioned polyurethane-based resin include a high molecular weight polymer obtained by a reaction of polyether polyol and polyisocyanate or a reaction of polycarbonate polyol and polyisocyanate, and inter alia, from the viewpoints of water resistance, heat resistance, etc., a high molecular weight polymer obtained by a reaction of polycarbonate polyol and polyisocyanate is preferred. As the polyisocyanate, aliphatic or aromatic polyisocyanates such as hexamethylene diisocyanate, xylylene diisocyanate, isophorone diisocyanate, tolylene diisocyanate, diphenylmethane diisocyanate, triphenylmethane triisocyanate, naphthylene diisocyanate, etc. may be used, and an aliphatic polyisocyanate is preferred in terms of weather resistance.

Also, examples of the above-mentioned silicon-based resin include those having a siloxane bond in the basic skeleton thereof, and particularly preferred is the one having hydrogen, C1 to C3 alkyl, C1 to C3 phenyl, or alkoxy thereof bound to a silicon atom. Inter alia, dimethylsiloxane is particularly preferred. In addition, modified silicon-based resins such as amino-modified, epoxy-modified or alkylene oxide-modified dimethylsiloxane, or a mixture thereof may be preferably used.

Also, examples of the above-mentioned fluorine-based resin include tetrafluoroethylene polymer, chlorotrifluoroethylene polymer, tetrafluoroethylene-hexafluoropropylene copolymer, tetrafluoroethylene-perfluoroalkylvinylether copolymer, tetrafluoroethylene-hexafluoropropylene-perfluoroalkylvinyl ether copolymer, vinylidene fluoride polymer, ethylene-tetrafluoroethylene copolymer, etc. Usually, the fluorine-based resin is preferably used in the form of a dispersion where a particulate fluorine-based resin is dispersed in a disperse medium with a dispersant, or in the form of a water emulsion where a particulate fluorine-based resin is emulsified in an aqueous medium with an emulsifier.

In the present invention, the method for drawing each constituent filament or a composite yarn is not particularly limited, and a publicly known drawing method, for example a method in which drawing is performed in a liquid or a gas on heating may be used. The heating temperature in drawing is different depending on the type of the constituent filament, the thickness of the composite yarn and the like, and may be suitably determined taking those conditions into account.

For example, in the case of a thick composite yarn more than about 1 mm in diameter, it is preferred to perform drawing at a temperature not lower than the melting point of the constituent filament. On the other hand, in the case of a composition yarn about 1 mm or less in diameter, drawing may be performed at a temperature more than, equal to or lower than the melting point of the constituent filament and it is preferred to perform drawing at a temperature not lower than the melting point. More specifically, the drawing temperature is about 120 to 300°C, preferably about 130 to 250°C, more preferably about 130 to 200°C, and still more preferably about 130 to 170°C.

The drawing may be performed in one step or two or more steps.

The draw ratio in the above-mentioned drawing may be suitably determined depending on the type of the constituent filament, whether or not the constituent filament is already drawn, and if drawn, the degree of drawing. The specific draw ratio is, for example, about 1.01 to 15.

During drawing, a tapered shape can be formed as follows. Specifically, a tapered shape can be formed during drawing by adjusting the drawing speed. More specifically, increasing the drawing speed reduces the diameter in a longitudinal direction, and decreasing the drawing speed increases the diameter in a longitudinal direction. When the drawing speed is changed as mentioned above, it is preferred that the drawing speed is smoothly on the increase or on the decrease. That is, it is preferred that the drawing speed is gradually increased and/or decreased. As long as the drawing speed changes in such a gradual manner, the change may be linear or nonlinear.

The drawing speed in forming a tapered shape is different depending on the type of the constituent filament, the thickness of the composite yarn and the like, and may be suitably determined taking those conditions into account. For example, when a composite yarn is drawn into a tapered shape, the ratio of the drawing speed for forming the thickest part of the yarn to the drawing speed for forming the thinnest part of the yarn is preferably about 1:2 to 6. When a constituent filament is drawn into a tapered shape, the ratio of the drawing speed for forming the thickest part to the drawing speed for forming the thinnest part is preferably about 1:1.5 to 4.

In the present invention, the method for bonding constituent filaments is not particularly limited, and, as described above, a method in which a thermal adhesive resin is used is preferred. Examples of the method in which a thermal adhesive resin is used for bonding include a method in which constituent filaments are coated with a thermal adhesive resin beforehand. The coating method is not particularly limited, and any coating method known in the art may be used. For example, coating can be formed by impregnating the constituent filaments in a bath containing a liquid of melted thermal adhesive resin, squeezing excess resin therefrom, and then drying the filaments.

When the constituent filaments are bonded with the thermal adhesive resin after the composite yarn is formed, the temperature is usually not less than the melting point of the thermal adhesive resin and not more than that of the constituent filament, preferably about 50 to 200 °C, more preferably 50 to 160°C, and still more preferably about 60 to 130°C.

In the present invention, the method for coating the periphery of the composite yarn with a resin is not particularly limited, and a publicly known resin coating method may be used. For example, pressure extrusion coating may be used, and in particular a pipe-type extrusion coating method is preferred. The pipe-type extrusion coating method, in which a melted coating resin is extruded from an extrusion molding machine and tightly stick onto a preheated yarn under pressure, results in markedly excellent adhesion of coating. In addition, the coating resin may be applied using known methods such as, an applicator, a knife coater, a reverse roller coater, a Gravure coater, a flow coater, a rod coater, or a brush, or applied by impregnating the core yarn in a bath containing a melted or solution thermal adhesive resin and then squeezing excess resin therefrom.

The above-mentioned resin coating method can not only coat the periphery of the composite yarn with a resin but also allow the coating resin to permeate into the yarn and make the constituent filaments bond each other. That is, the resin coating method can be at the same time a method for bonding constituent filaments. In this case, the above mentioned coating of constituent filaments is not needed.

In the above-mentioned resin coating, the composite yarn of the present invention may be made into a tapered shape. A publicly known method may be used to form a tapered shape. For example, by regulating the rotating speed of the measuring pump (gear pump) built into the extruder to change the amount of discharged resin, and controlling the duration of each rotating speed, a tapered shape having thickest part, thinnest part and tapered part, each of which has a predetermined length, can be formed. The shape of the tapered part can be changed by changing the switching time of the measuring pump from high speed rotation to low speed rotation, or from low speed rotation to high speed rotation.

The composite yarn of the present invention may be subjected to aftertreatment by a publicly known method if desired. For example, the yarn of the present invention may be colored. The coloring method may be a publicly known method. For example, the yarn of the present invention can be colored by being directed through a bath containing a colorant solution at a room temperature, for example at about 20 to 25°C, dried, and then directed through a furnace kept at about 100 to 130°C. As the colorant, inorganic pigments, organic pigments and organic dyes are known, and preferable examples thereof include titanium oxide, cadmium compounds, carbon black, azo compounds, cyanine dyes, polycyclic pigments, and the like.

### Examples

Hereinafter, the invention will be more specifically described by referring to the examples below, but needless to say, the invention is not limited thereto.

In each example, "Dyneema (trade name) SK71" manufactured by Toyobo Co., Ltd. was used as the ultra-high-molecular-weight-polyethylene filament.

The fineness in each example was, even when a hot melt adhesive and/or a surface-treatment agent was applied onto a filament during the manufacturing process and/or a finally obtained composite yarn, calculated without including the mass of the applied hot melt adhesive and/or the surface-treatment agent.

### Example 1

A luminescent polypropylene multifilament (trade name: PYLEN R20 235T30FM1, manufactured by MRC PYLEN Co., Ltd.) (235 dtex/30fil) was heat drawn at a draw ratio of 2.1 at 176°C, and 3 parts by mass of a hot melt adhesive (trade name: HM320S manufactured by Cemedine Co., Ltd.) was applied to 100 parts by mass of the filament. The obtained filament was used as an auxiliary filament.

Three ultra-high-molecular-weight-polyethylene filaments (110 dtex/96f) and one above-mentioned auxiliary filament to which a hot melt adhesive had been applied were used to braid a 4 strand yarn (fineness 484 dtex), which was heat drawn at a draw ratio of 1.33 at 160°C to obtain the object composite yarn.

### Example 2

Into a polypropylene resin chip (trade name: Novatech PP FY4 manufactured by Japan Polypropylene Corp.), 5% by mass of a light storage agent (trade name: LumiNova GLL-300FFS(S1) manufactured by Nemoto & Co., Ltd.) was blended. The mixture was melt-kneaded, and then spinned (at 150°C) and drawn (at a draw ratio of 7) in the usual manner. The obtained monofilament (55 dtex) was used as an auxiliary filament.

Four ultra-high-molecular-weight-polyethylene filaments (55 dtex/48f) and four above-mentioned auxiliary filaments were used to braid a 8 strand yarn (fineness 484 dtex), which was heat drawn at a draw ratio of 1.33 at 160°C. Onto 100 parts by mass of the obtained yarn, 5 parts by mass of a silicone surface-treatment agent (product number: KF-96A manufactured by Shin-Etsu Chemical Co., Ltd.) was applied to obtain the object composite yarn. This composite yarn was semi-transparent in appearance.

### Example 3

One auxiliary filament to which a hot melt adhesive had been applied, which is the same filament as used in Example 1, was used as a core yarn. On the periphery of this auxiliary filament, four ultra-high-molecular-weight-polyethylene filaments (110 dtex/96f) were disposed to braid a 4 strand yarn (fineness 605 dtex), which was heat drawn at a draw ratio of 1.7 at 160°C to obtain the object composite yarn.

### Example 4

Into a copolyamide resin chip (trade name: Novamid 2030 by Mitsubishi Engineering-Plastics Corp.), 5% by mass of a light storage agent (trade name: LumiNova GLL-300FFS(S1) manufactured by Nemoto & Co., Ltd.) was blended. The mixture was melt-kneaded, and then spinned (at 250°C) and drawn (at a draw ratio of 5.9) in the usual manner to obtain a monomultifilament (110 dtex/5f). After application of 3 parts by mass of a hot melt adhesive (trade name: HM320S manufactured by Cemedine Co., Ltd.) to 100 parts by mass of the monomultifilament, the obtained filament was used as an auxiliary filament.

Three ultra-high-molecular-weight-polyethylene filaments (110 dtex/96f) and one above-mentioned auxiliary filament to which a hot melt adhesive had been applied were used to braid a 4 strand yarn (fineness 484 dtex), which was heat drawn at a draw ratio of 1.33 at 170°C to obtain the object composite yarn.

### Example 5

Into a copolyamide resin chip (trade name: Novamid 2030 manufactured by Mitsubishi Engineering-Plastics Corp.), 5% by mass of a light storage agent (trade name: LumiNova GLL-300FFS(S1) manufactured by Nemoto & Co., Ltd.) was blended. The mixture was melt-kneaded, and then spinned (at 250°C) and drawn (at a draw ratio of 5.9) in the usual manner. The obtained monofilament (55 dtex) was used as an auxiliary filament.

Four ultra-high-molecular-weight-polyethylene filaments (55 dtex/48f) and four above-mentioned auxiliary filaments were used to braid a 8 strand yarn (fineness 484 dtex), which was heat drawn at a draw ratio of 1.33 at 170°C. Onto 100 parts by mass of the obtained yarn, 5 parts by mass of a silicone surface-treatment agent (product number: KF-96A by Shin-Etsu Chemical Co., Ltd.) was applied to obtain the object composite yarn. This composite yarn was semi-transparent in appearance.

### Example 6

Into a polyethylene terephthalate resin chip (trade name: NEH2070 manufactured by Unitika Ltd.), 5% by mass of a light storage agent (trade name: LumiNova GLL-300FFS(S1) manufactured by Nemoto & Co., Ltd.) was blended. The mixture was melt-kneaded, and then spinned (at 280°C) and drawn (at a draw ratio of 7.0) in the usual manner to obtain a monomultifilament (110 dtex/5f). After application of 3 parts by mass of a hot melt adhesive (trade name: HM320S manufactured by Cemedine Co., Ltd.) to 100 parts by mass of the monomultifilament, the obtained filament was used as an auxiliary filament.

Three ultra-high-molecular-weight-polyethylene filaments (110 dtex/96f) and one above-mentioned auxiliary filament to which a hot melt adhesive had been applied were used to braid a 4 strand yarn (fineness 484 dtex), which was heat drawn at a draw ratio of 1.33 at 190°C to obtain the object composite yarn.

### Example 7

Into a polyethylene terephthalate resin chip (trade name: NEH2070 manufactured by Unitika Ltd.), 5% by mass of a light storage agent (trade name: LumiNova GLL-300FFS(S1) manufactured by Nemoto & Co., Ltd.) was blended. The mixture was melt-kneaded, and then spinned (at 280°C) and drawn (at a draw ratio of 7.0) in the usual manner. The obtained monofilament (55 dtex) was used as an auxiliary filament.

Four ultra-high-molecular-weight-polyethylene filaments (55 dtex/48f) and four above-mentioned auxiliary filaments were used to braid a 8 strand yarn (fineness 484 dtex), which was heat drawn at a draw ratio of 1.33 at 190°C. Onto 100 parts by mass of the obtained yarn, 5 parts by mass of a silicone surface-treatment agent (product number: KF-96A by Shin-Etsu Chemical Co., Ltd.) was applied to obtain the object composite yarn. This composite yarn was semi-transparent in appearance.

### Example 8

Into a polyvinylidene fluoride resin chip, 5% by mass of a light storage agent (trade name: LumiNova GLL-300FFS(S1) manufactured by Nemoto & Co., Ltd.) was blended. The mixture was melt-kneaded, and then spinned (at 260°C) and drawn (at a draw ratio of 6.5) in the usual manner. The obtained monofilament (55 dtex) was used as an auxiliary filament.

Four ultra-high-molecular-weight-polyethylene filaments (55 dtex/48f) and four above-mentioned auxiliary filaments were used to braid a 8 strand yarn (fineness 484 dtex), which was heat drawn at a draw ratio of 1.33 at 160°C. Onto 100 parts by mass of the obtained yarn, 5 parts by mass of a silicone surface-treatment agent (product number: KF-96A by Shin-Etsu Chemical Co., Ltd.) was applied to obtain the object composite yarn. This composite yarn was semi-transparent in appearance.

The Table 1 below shows the properties of the yarns (composite yarns) of the present invention separately obtained in each of the above Examples.

**Table 1**

| | Total Fineness (dtex) | Diameter (mm) | Specific Gravity | Cross-section ratio⁻¹ | | Strength (cN/dtex) | Elongation (%) |
|---|---|---|---|---|---|---|---|
| | | | | A (%) | B (%) | | |
| Example 1 | 363 | 0.215 | 0.96 | 73 | 27 | 23.2 | 3.5 |
| Example 2 | 363 | 0.218 | 0.95 | 47 | 53 | 15.5 | 3.2 |
| Example 3 | 356 | 0.202 | 0.97 | 78 | 22 | 24.7 | 4.1 |
| Example 4 | 363 | 0.209 | 1.08 | 77 | 23 | 23.2 | 4.1 |
| Example 5 | 363 | 0.207 | 1.06 | 53 | 47 | 15.5 | 3.9 |
| Example 6 | 363 | 0.205 | 1.06 | 80 | 20 | 23.2 | 4.3 |
| Example 7 | 363 | 0.197 | 1.16 | 58 | 42 | 15.5 | 4.1 |
| Example 8 | 363 | 0.188 | 1.27 | 63 | 37 | 15.5 | 4.0 |

| | | | | | | | |
|---|---|---|---|---|---|---|---|
| *1 A: Ultra-high-molecular-weight-polyethylene filament B: Auxiliary filament | | | | | | | |

The yarns separately obtained in each Example were irradiated with ultraviolet LED having a wavelength of 375 nm and stored the light. They had good luminescence and an excellent visibility in a dark place. However, the yarn of Example 3, in which an auxiliary filament containing a light storage agent was used as the core yarn, showed weaker luminescence compared to those in the other Examples.

## Claims

1. A composite yarn comprising an ultra-high-molecular-weight-polyethylene filament and an additional synthetic resin filament, **characterised by** at least a part of the additional synthetic resin filament comprising a light storage agent.

2. The composite yarn according to claim 1, wherein the specific gravity of the yarn is less than 1.0.

3. The composite yarn according to claim 1 or 2, wherein the strength of the yarn is not less than 11 cN/dtex.

4. The composite yarn according to any one of claims 1 to 3, wherein the rate of elongation of the yarn is not more than 5%.

5. The composite yarn according to any one of claims 1 to 4, wherein the additional synthetic resin filament is made of at least one thermoplastic resin selected from the group consisting of polyolefin resins, polyamide resins, polyester resins and fluorine resins.

6. The composite yarn according to any one of claims 1 to 5, wherein the yarn is a braided yarn.

7. The composite yarn according to claim 6, wherein the additional synthetic resin filament is a monofilament.

8. The composite yarn according to any one of claims 1 to 7, wherein filaments constituting the yarn are integrated with the use of a resin.

9. The composite yarn according to any one of claims 1 to 8, wherein a silicone surface treatment agent is applied to the yarn.

10. The composite yarn according to any one of claims 1 to 8, wherein the periphery of the yarn is further coated with a resin.

11. The composite yarn according to any one of claims 1 to 10, wherein the yarn is a fishing line.

## Patentansprüche

1. Verbundgarn, umfassend ein Polyethylenfilament mit ultrahohem Molekulargewicht und ein weiteres Kunstharzfilament, **dadurch gekennzeichnet, dass** zumindest ein Teil des weiteren Kunstharzfilaments ein Lichtspeichermittel umfasst.

2. Verbundgarn nach Anspruch 1, wobei die relative Dichte des Garns weniger als 1,0 beträgt.

3. Verbundgarn nach Anspruch 1 oder 2, wobei die Festigkeit des Garns nicht weniger als 11 cN/dtex beträgt.

4. Verbundgarn nach einem der Ansprüche 1 bis 3, wobei der Dehnungsgrad des Garns nicht mehr als 5 % beträgt.

5. Verbundgarn nach einem der Ansprüche 1 bis 4, wobei das weitere Kunstharzfilament aus zumindest einem thermoplastischen Harz, ausgewählt aus der Gruppe, bestehend aus Polyolefinharzen, Polyamidharzen, Polyesterharzen und Fluorharzen, hergestellt ist.

6. Verbundgarn nach einem der Ansprüche 1 bis 5, wobei das Garn ein geflochtenes Garn ist.

7. Verbundgarn nach Anspruch 6, wobei das weitere Kunstharzfilament ein Monofilament ist.

8. Verbundgarn nach einem der Ansprüche 1 bis 7, wobei Filamente, die das Garn bilden, unter Verwendung eines Harzes integriert werden.

9. Verbundgarn nach einem der Ansprüche 1 bis 8, wobei ein Silikon-Oberflächenbehandlungsmittel auf das Garn aufgebracht ist.

10. Verbundgarn nach einem der Ansprüche 1 bis 8, wobei die Peripherie des Garns ferner mit einem Harz beschichtet ist.

11. Verbundgarn nach einem der Ansprüche 1 bis 10, wobei das Garn eine Angelschnur ist.

## Revendications

1. Fil composite, comprenant un filament de polyéthylène à ultra haut poids moléculaire et un filament de résine synthétique supplémentaire, **caractérisé en ce qu'**au moins une partie du filament de résine synthétique supplémentaire comprend un agent d'accumulation de lumière.

2. Fil composite selon la revendication 1, dans lequel la gravité spécifique du fil est inférieure à 1,0.

3. Fil composite selon la revendication 1 ou 2, dans lequel la résistance du fil n'est pas inférieure à 11 cN/dtex.

4. Fil composite selon l'une quelconque des revendications 1 à 3, dans lequel le taux d'allongement du fil n'est pas supérieur à 5 %.

5. Fil composite selon l'une quelconque des revendications 1 à 4, dans lequel le filament de résine synthétique supplémentaire est constitué d'au moins une résine thermoplastique qui est sélectionnée dans le groupe comprenant des résines de polyoléfine, des résines de polyamide, des résines de polyester et des résines de fluor.

6. Fil composite selon l'une quelconque des revendications 1 à 5, dans lequel le fil est un fil tressé.

7. Fil composite selon la revendication 6, dans lequel le filament de résine synthétique supplémentaire est un mono-filament.

8. Fil composite selon l'une quelconque des revendications 1 à 7, dans lequel des filaments qui constituent le fil sont intégrés en utilisant une résine.

9. Fil composite selon l'une quelconque des revendications 1 à 8, dans lequel un agent de traitement de surface au silicone est appliqué au fil.

10. Fil composite selon l'une quelconque des revendications 1 à 8, dans lequel la périphérie du fil est en outre revêtue d'une résine.

11. Fil composite selon l'une quelconque des revendications 1 à 10, dans lequel le fil est une ligne de pêche.
